# EUROPÄISCHE PATENTANMELDUNG

(11) **EP 4 332 772 A1**
(43) Veröffentlichungstag der Anmeldung: **06.03.2024**
(21) Anmeldenummer: 22192838.5
(22) Anmeldetag: 30.08.2022
(51) Int. Cl.: G06F 9/54, H04L 67/10

(54) **DATA DISTRIBUTION SERVICE-FÄHIGER CONTROLLER**

(71) Anmelder: Siemens Aktiengesellschaft, 80333 München (DE)
(72) Erfinder: Sedlacek, Matous, 84034 Landshut (DE)
(74) Vertreter: Siemens Patent Attorneys

(57) **Zusammenfassung**

Die Erfindung betrifft ein Verfahren und eine Vorrichtung, die eine datenzentrierte Konnektivität nach dem DCPS-Kommunikationsmodell (data-centric publish-subscribe (DCPS) communication model) für Internet-of-Things-Anwendungen (IoT-Anwendungen) bieten. Insbesondere betrifft die Erfindung die Integration des Data Distribution Service Standards (DDS-Standard) der Object Management Group (OMG) in Controller von Produktionsanlagen, um die Kommunikation zwischen den Controllern zu verbessern, um eine Steuerung der Produktionsanlagen in Echtzeit ohne Stillstand-, Abschalt- oder Ausfallzeiten zu ermöglichen.

Offenbart ist ein Controller eines Systems und ein Verfahren zum Herausgeben von Daten an einen globalen Datenraum (Global Data Space, GDS) gemäß dem Data Distribution Service Standard (DDS-Standard); zum Abonnieren von Daten vom GDS gemäß dem DDS-Standard; und zum Einstellen und/oder Einhalten von Systemparametern des Systems basierend auf den abonnierten Daten vom GDS.

## Beschreibung

### Standards

Die Standard-Familie Data Distribution Service (DDS), nachfolgend summarisch als DDS-Standard bezeichnet, der Object Management Group (OMG) ist hierin durch Bezugnahme in ihrer Gesamtheit aufgenommen. Die im Folgenden verwendete Terminologe stützt sich auf Definitionen, die dem DDS-Standard entnommen sind oder auf diesem basieren. Durch die Verwendung der Terminologe wird direkt auf die Definitionen im DDS-Standard verwiesen.

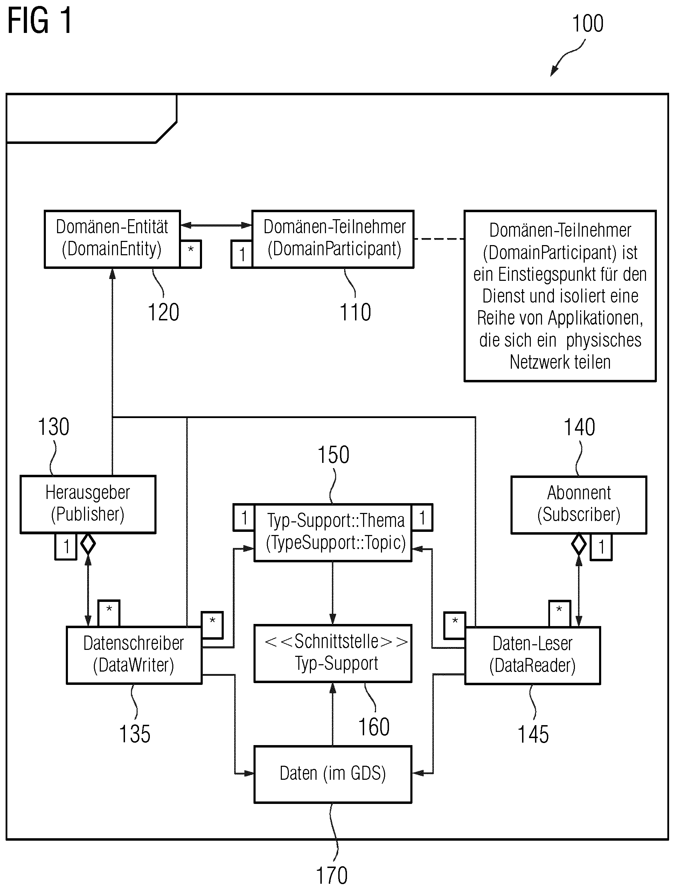

Insbesondere ist auf den DDS-Standard OPC UA/DDS Gateway Version 1.0 verwiesen, dem eine Reihe von Begrifflichkeiten zu entnehmen sind, die einem Fachmann im technischen Gebiet der vorliegenden Erfindung ohne Weiteres geläufig sind. Im Folgenden werden einige zentrale Begrifflichkeiten (nachfolgend kursiv hervorgehoben) mit Bezug zur FIG 1 veranschaulichend beschrieben. Zur Verbesserung der Stringenz werden die im DDS-Standard verwendeten Akronyme wiederverwendet, Akronyme vom DDS-Standard sind hierin nicht ins Deutsche übersetzt.

DDS basiert auf einem *datenzentrischen Herausgeben-Abonnieren-Kommunikationsmodell (data-centric publish-subscribe (DCPS) communication model, DCPS-Kommunikationsmodell*)*,* bei dem Produzenten und Konsumenten von Informationen zeitlich und räumlich voneinander entkoppelt sind und Informationen über eine Reihe von Themen austauschen können, um eine nahtlose Kommunikation zu ermöglichen.

Das DDS-DCPS-Kommunikationsmodell 100 basiert auf dem Konzept eines *globalen Datenraums* (*Global Data Space, GDS,* 170), der für alle interessierten Applikationen zugänglich ist. DDS-Applikationen, die daran interessiert sind, Informationen zum GDS beizusteuern, werden zu Herausgebern (*publisher 130*), und DDS Anwendungen, die an Teilen des GDS interessiert sind, werden zu *Abonnenten* (*subscriber 140*)*.* Wenn ein Herausgeber neue Daten in den GDS einstellt, gibt die DDS-Middleware die Informationen an die entsprechenden Abonnenten weiter.

Die Informationen, die Herausgeber und Abonnenten im GDS austauschen, werden als *Themen* (*topics*) bezeichnet, welche die Datenelemente im GDS eindeutig identifizieren. Jedes Thema ist mit einem *Typ* (*type 150*) assoziiert, der Informationen darüber liefert, wie die Daten zu bearbeiten sind, und über die Schnittstelle 160 eine gewisse Sicherheit für den Typ bietet.

Der GDS ist in verschiedene logische Bereiche unterteilt, die *Domänen (domain 120)* genannt werden. DDS-Applikationen können in verschiedenen Domänen mit verschiedenen *Domänen-Teilnehmern* (*DomainParticipant* 110) teilnehmen. Ebenso können Domänen-Teilnehmer verschiedene *Daten-Schreiber* (*DataWriter* 135) und/oder *Daten-Leser* (*DataReader 145*) erzeugen, um verschiedene Themen in einer bestimmten Domäne herauszugeben und/oder zu abonnieren. Fig. 1 entspricht im Wesentlichen der Abbildung 7.2 im Standard OPC UA/DDS Gateway Version 1.0. Sie gibt einen Überblick über das DCPS-Modell und zeigt die verschiedenen DDS-Entitäten, die Applikationen eine Teilnahme im GDS ermöglichen.

Ferner sind hierin auch die Spezifikation des Totally Integrated Automation Portal (TIA Portal) von Siemens sowie die Standards, welche das TIA Portal implementiert, durch Bezugnahme in ihrer Gesamtheit aufgenommen. Das TIA Portal ist eine Software, die Zugriff auf das gesamte Spektrum der digitalisierten Automatisierungsdienstleistungen von Siemens bietet, von der digitalen Planung über das integrierte Engineering bis hin zum Betrieb. Im TIA Portal werden in Projekten Automatisierungslösungen inklusive Controller, Ein/Ausgangsmodule, usw. händisch in einer Benutzerschnittstelle (user interface, UI) verdrahtet und konfiguriert.

Ebenso wird ein Benutzer Programm Code (user programm code) entwickelt der anschließend über das TIA Portal auf die Controller heruntergeladen wird (download). Damit beinhalten die Controller ein lauffähiges Benutzer Programm (user programm).

### Technisches Gebiet

Die Erfindung betrifft ein Verfahren und eine Vorrichtung, die eine datenzentrierte Konnektivität nach dem DCPS-Kommunikationsmodell (data-centric publish-subscribe (DCPS) communication model) für Internet-of-Things-Anwendungen (IoT-Anwendungen) bieten. Insbesondere betrifft die Erfindung die Integration des Data Distribution Service Standards (DDS-Standard) der Object Management Group (OMG) in Controller von Produktionsanlagen, um die Kommunikation zwischen den Controllern zu verbessern, um eine Steuerung der Produktionsanlagen in Echtzeit ohne Stillstand-, Abschalt- oder Ausfallzeiten zu ermöglichen.

### Hintergrund

Die Kommunikation zwischen herkömmlichen Controllern von Systemen wie Produktionsanlagen weist eine Vielzahl an Einschränkungen auf.

Beispielsweise ist eine schnelle Steuerung einer Produktionsanlage mit herkömmlichen Controllern nicht möglich, um einen Durchsatz der Produktionsanlage rasch zu steuern. In anderen Worten, die beispielhafte Qualität "Durchsatz" kann mit herkömmlichen Controllern nicht oder nicht ohne Unterbruch der Produktion gesteuert werden, weil eine hierzu erforderliche Qualität "Latenz" die rasche Steuerung verhindert.

Der Durchsatz eines Systems wie bspw. eine Produktionsanlage für ein Produkt ist die Menge von dem Produkt, welche innerhalb eines bestimmten Zeitraums ausgegeben wird.

Die Latenz eines Systems ist ein Zeitraum zwischen einer Ausgabe eines Steuerbefehls durch einen Controller an das System und einer Reaktion des Systems auf den Steuerbefehl des Controllers. Im Zusammenhang mit dem DDS-Standard und dem GDS kann die Latenz auch als der Zeitraum definiert sein, die Daten von ihrer Quelle bis zu einem Ziel benötigen.

Ferner erfordert ein Hinzufügen zusätzlicher Controller zu einem System meist (i) eine zusätzliche Konfiguration des Systems, die mit Stillstandzeiten des Systems verbunden ist, und (ii) Fachwissen, über welches ein Endnutzer eines Systems häufig nicht verfügt, wodurch Anlaufzeiten von Produktionsanlagen verlängert werden können.

Generell ist das Hinzufügen von Daten, die für eine Qualität (Durchsatz, Latenz, usw.) eines Systems von Bedeutung sind, in den Kommunikationsfluss zu oder von einem oder mehreren Controllern des Systems nur mit einem erheblichem Aufwand möglich.

Das Verknüpfen der Kommunikation von und zu einem oder mehreren Controllern ist komplex und mit herkömmlicher Client-Server betriebener Kommunikation häufig gar nicht oder nicht ohne unverhältnismäßig großen Aufwand möglich.

Die Komplexität der Kommunikation wird beispielsweise durch nicht standardisierten Protokolle oder durch die Verwendungen einer Vielzahl von Proxies und Gateways erhöht.

Der Aufwand für die Integration von verschiedenen Applikationen und/oder von Hardware in ein System unter Verwendung der herkömmlichen Kommunikationsmodelle und Controller ist häufig zu hoch, um Entscheidungen in Echtzeit, reduzierte Ausfallzeiten, spontane Änderungen im Betriebsablauf, oder spontane Reaktionen auf auftretende Probleme usw. zu ermöglichen.

Bisher wurde, beispielsweise über OPC-Classic bzw. OPC-UA und Zwischenschichten (OMS+), eine Client-Server getriebene Adressierung und Verknüpfung verwendet, um die Kommunikation von und zu Komponenten eines Systems zu führen. Hierbei wurden IP-Adressen strikt zugewiesen und Controller im System über das TIA Portal konfiguriert. Eine Integration von neuen Komponenten und/oder eine Integration von Daten zur Steuerung eines Systems in Echtzeit ohne Stillstand-, Abschalt- oder Ausfallzeiten war mit den bisherigen Lösungen jedoch nicht oder nur beschränkt möglich.

Es ist eine Aufgabe der vorliegenden Erfindung die oben genannten Probleme zu lösen. Insbesondere soll die erfindungsgemäße Lösung eine Integration von Komponenten und/oder eine Integration von Daten zur Steuerung eines Systems in Echtzeit ohne Stillstand-, Abschalt- oder Ausfallzeiten ermöglichen.

### Zusammenfassung

Die Aufgaben der vorliegenden Erfindung werden durch den beanspruchten erfindungsgemäßen Gegenstand gelöst.

Der beanspruchte erfindungsgemäße Gegenstand ist durch die unabhängigen Ansprüche definiert. Die abhängigen Ansprüche definieren vorteilhafte Ausführungsformen.

Gemäß einem Ausführungsbeispiel umfasst ein Controller eines Systems eine Sendevorrichtung zum Herausgeben von Daten an einen globalen Datenraum (Global Data Space, GDS) gemäß dem Data Distribution Service Standard (DDS-Standard); eine Empfangsvorrichtung zum Abonnieren von Daten vom GDS gemäß dem DDS-Standard; und eine Steuervorrichtung zum Einstellen und/oder Einhalten von Systemparametern des Systems basierend auf den abonnierten Daten vom GDS.

Gemäß einem Ausführungsbeispiel umfasst ein Controller eine Compilervorrichtung zum Erzeugen von Typen, Routinen und Wrapper-Funktionen basierend auf einer Datei (Interface Definition Language Datei, IDL Datei), welche eine Schnittstelle des Controllers zum GDS definiert.

Gemäß einem Ausführungsbeispiel umfasst ein Controller ein HMI (Human Machine Interface), einen Industrie PC (IPC), ein Edge Device, einen Switch, oder einen Router.

Gemäß einem Ausführungsbeispiel konfigurieren die von der Sendevorrichtung herausgegebenen Daten einen Kommunikationskanal zwischen dem Controller und einem Abonnenten der herausgegebenen Daten, und/oder die von der Empfangsvorrichtung abonnierten Daten konfigurieren den Kommunikationskanal.

Gemäß einem Ausführungsbeispiel umfasst ein Verfahren zum Steuern eines Systems mittels eines Controllers einen Schritt zum Herausgeben von Daten an einen globalen Datenraum (Global Data Space, GDS) gemäß dem Data Distribution Service Standard (DDS-Standard); einen Schritt zum Abonnieren von Daten vom GDS gemäß dem DDS-Standard; und einen Schritt zum Einstellen und/oder Einhalten von Systemparametern eines Systems basierend auf den abonnierten Daten vom GDS.

Gemäß einem Ausführungsbeispiel umfasst ein Verfahren zum Steuern eines Systems mittels eines Controllers einen Schritt zum Erzeugen von Typen, Routinen und Wrapper-Funktionen basierend auf einer Datei (Interface Definition Language Datei, IDL Datei), welche eine Schnittstelle des Controllers zum GDS definiert.

Gemäß einem Ausführungsbeispiel umfasst ein System eine Vielzahl von Controllern, die gemäß dem DDS-Standard mit dem GDS gekoppelt sind.

Gemäß einem Ausführungsbeispiel umfasst ein nicht flüchtiges computerlesbares Medium darauf gespeicherten Code, welcher, wenn er von einem oder von mehreren Prozessoren eines Systems ausgeführt wird, einen oder mehrere Controller des Systems dazu veranlasst ein Verfahren zum Steuern des Systems mittels des einen oder der mehreren Controller durchzuführen, wobei das Verfahren die folgenden Schritte umfasst: einen Schritt zum Herausgeben von Daten an einen globalen Datenraum (Global Data Space, GDS) gemäß dem Data Distribution Service Standard (DDS-Standard); einen Schritt zum Abonnieren von Daten vom GDS gemäß dem DDS-Standard; und einen Schritt zum Einstellen und/oder Einhalten von Systemparametern eines Systems basierend auf den abonnierten Daten vom GDS.

### Kurzbeschreibung der Figuren

Die vorliegende Erfindung wird nachfolgend anhand der in den schematischen Figuren gezeigten Ausführungsbeispiele näher erläutert.
FIG 1 (reproduziert nach Abbildung 7.2 im Standard OPC UA/DDS Gateway Version 1.0) zeigt einen Überblick über das DCPS-Kommunikationsmodell und die verschiedenen DDS-Entitäten, die Applikationen eine Teilnahme im GDS ermöglichen.
FIG 2 zeigt ein System mit DDS-fähigen Controllern, die über den GDS kommunikativ miteinander gekoppelt sind.
FIG 3 veranschaulicht einen technischen Arbeitsablauf eines Controller Programms zum Koppeln einer Applikation an den GDS.

In den Figuren sind gleiche, funktionsgleiche und gleich wirkende Elemente, Merkmale und Komponenten - sofern nichts anderes ausgeführt ist - jeweils mit denselben Bezugszeichen versehen.

### Beschreibung von bevorzugten Ausführungsbeispielen

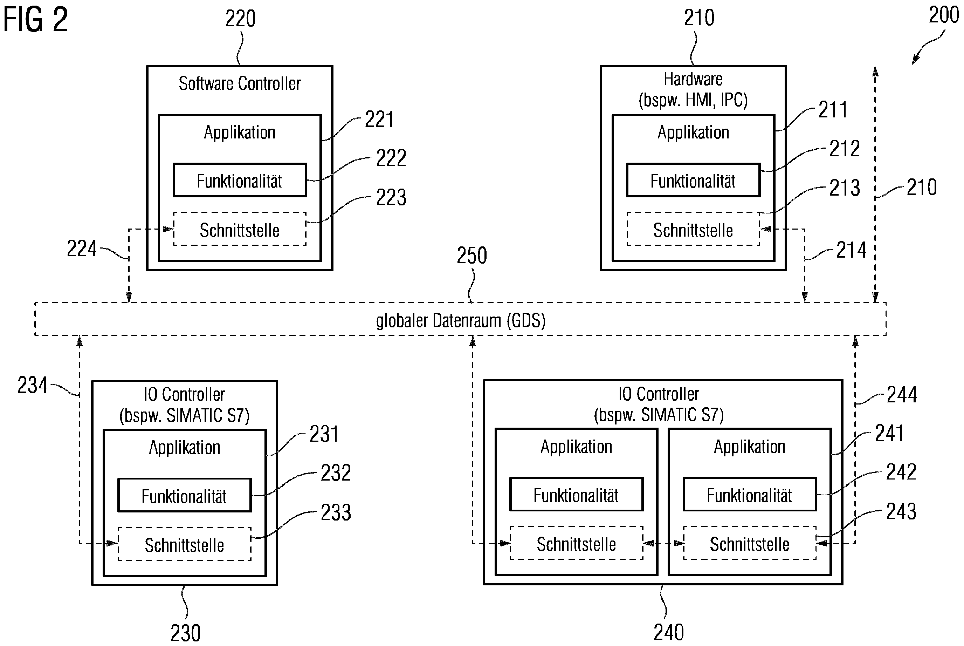

FIG 2 zeigt ein System 200 mit DDS-fähigen Controllern 210, 220, 230, 240, die über einen GDS 250 kommunikativ miteinander gekoppelt sind. Gestrichelte Linien zeigen die konzeptuelle Implementierung des DDS-Standards im System 200 an.

Wie in FIG 2 gezeigt kann ein DDS-fähiger Controller eine Hardware 210 sein. Eine Applikation 211 der Hardware 210 kann über eine Schnittstelle 213 mit dem GDS 250 gekoppelt sein. Die Hardware kann bspw. ein HMI (Human Machine Interface), ein Industrie PC (IPC), ein Edge Device, ein Switch, oder ein Router sein. Ein Edge Device ist eine Komponente eines Netzwerks, die sich an einem Rand des Netzwerks befindet und für den Zugang zu einem Kernnetz eines Unternehmens oder eines Service Providers sorgt. Beispiele von Applikation 211 sind Diagnose und Monitoring, Alarming, Interaktionen zwischen AGVs und/oder AMRs (Automated Guided Vehicles und/oder Automated Mobile Robots) bzw. Interaktionen von AGVs und/oder AMRs mit Produktionszellen, oder Edge-AI. Die Applikation 211 kann eine oder mehrere Funktionalitäten 212 bereitstellen. Beispiele von Funktionalitäten 212 sind die Berechnung des Zeitpunkts wann verbaute Geräte funktionsunfähig werden, die schnelle Propagierung von Fehlerzuständen (Alarmen) in ein HMI Gerät (Systemdiagnose), Ack-Nack Kommunikation zwischen zwei AGV Instanzen die gemeinsam ein größeres Etwas transportieren, Berechnung von AI Modellen auf Edge Geräten zur Online Qualitäts-Analyse von Produkten inklusive schneller Triggerung von Aktorik zum Ausschuss von Teilen bei minderer Qualität. Dabei kann die Schnittstelle 213 über TCP/UDP und IP entweder kabelgebunden (Ethernet) oder kabellos (WiFi, 4G, 5G) mit dem GDS gekoppelt sein.

Ein DDS-fähiger Controller kann auch ein Software Controller 220 sein. Eine Applikation 221 des Software Controllers 220 kann über eine Schnittstelle 223 mit dem GDS 250 gekoppelt sein. Beispiele von Software Controllern 220 sind der SIMATIC S7-1500 Controller oder der SIMATIC ET 200SP Open Controller. Beispiele von Applikation 221 sind Elektromobilität oder die Modellierung und Simulation von Gesamtsystemen, z.B. im Rahmen von Windkraftanlagen. Generell sind aber alle Einsatzgebiete herkömmlicher Hardware-basierter Controller für einen DDS Einsatz denkbar. Die Applikation 221 kann eine oder mehrere Funktionalitäten 222 bereitstellen. Beispiele von Funktionalitäten 222 sind die Systemdiagnose und Alarming, das Simulieren von Kommunikationsströmen bei der Modellsimulation des Gesamtsystems.

Ein DDS-fähiger Controller kann ferner ein IO Controller 230, 240 sein. Beispiele von IO Controllern 230, 240 sind SIMATIC S7 Controller gemäß den Spezifikationen des TIA Portals. Eine oder mehrere Applikationen 231, 241 des IO Controllers 230, 240 können über eine Schnittstelle 233, 243 direkt oder indirekt mit dem GDS 250 gekoppelt sein.

Der GDS kann mit einem oder mit mehreren weiteren System verbunden werden (End-to-End Integration, 210), beispielsweise über 5G oder über TSN (Time-Sensitive Networking). TSN bezeichnet eine Reihe von Standards, an denen die Time-Sensitive Networking Task Group (IEEE 802.1) arbeitet. Die TSN Task Group hat sich zur Aufgabe gestellt Bausteine für deterministisches Ethernet für zeitkritische Anwendungen zu standardisieren, welche auch industriellen Anforderungen genügen. Ein Hinzufügen neuer Ressourcen zum GDS (Scale out) oder ein Erhöhen der Kapazität bestehender Ressourcen (Scale up) ist ebenfalls möglich. Dadurch wird es ohne Neukonfiguration der Kommunikation möglich die Produktion flexibel anzupassen, je nach gefordertem Durchsatz bzw. verbauten Kommunikationskomponenten. Heutzutage ist ein Hinzufügen von Ressourcen mit erheblichem Mehraufwand verbunden bzw. die übliche Client-Server Architektur ist limitiert im Durchsatz (Geschwindigkeit der Kommunikation) durch die verbauten Protokolle (z.B. S7).

Die Kommunikation einer Vielzahl von DDS-fähigen Controllern 210, 220, 230, 240, kann über Kontrakte stattfinden. Ein Kontrakt ist die Konfiguration der Qualität von Datenflüssen zwischen zwei oder mehreren Sendern und Empfängern. Damit die Qualität erfüllt werden kann, muss ein Handshaking (Matching) der konfigurierten Qualitäten zwischen den Entitäten stattfinden. Bei Mismatch wird ein Fehler angezeigt und die Kommunikation muss angepasst werden. Beispielsweise kann der Empfänger nicht vertrauenswürdige (reliable) Daten empfangen wenn der Sender nicht-vertrauenswürdige (best effort) Daten versendet.

Kontrakte können unterschiedliche Qualitäten betreffen. Qualitäten sind Kennzahlen bzw. Systemparameter die einen Kommunikationskanal zwischen Endpunkten (Sender, Empfänger) konfigurieren. Diese erlauben es zwischen Sende- und Empfangspunkten unterschiedliche Qualitäten in der Kommunikation aufzusetzen, die über den GDS laufen. Die Qualitäten, die durch die Kontrakte betroffen sind, sind durch die DDS-fähigen Controller einzustellen oder einzuhalten.

Beispiele von Qualitäten sind, ohne Beschränkung der Allgemeinheit (oBdA), Durchsatz, Latenz, Lebenszeit, Frequenz, Historie, Redundanz, Priorität, Filterung, Eigentumsstärke. Andere Qualitäten sind auch möglich.

Der Durchsatz eines Systems wie bspw. eine Produktionsanlage für ein Produkt ist die Menge von dem Produkt, welche innerhalb eines bestimmten Zeitraums ausgegeben wird. Diese Definition gilt analog für beliebige Systeme, die eine Ausgabe aufweisen.

Die Latenz eines Systems ist ein Zeitraum zwischen einer Ausgabe eines Steuerbefehls durch einen Controller an das System und einer Reaktion des Systems auf den Steuerbefehl des Controllers. Im Zusammenhang mit dem DDS-Standard und dem GDS kann die Latenz auch als der Zeitraum definiert sein, die Daten von ihrer Quelle bis zu einem Ziel benötigen.

Die Lebenszeit eines Systems oder einer Komponente dieses Systems ist eine Betriebszeit bis zu einem Ersatz des Systems oder der Komponente.

Die Frequenz ist die Frequenz mit der Datenpunkte in den GDS gesendet werden.

Die Historie ist eine Quantifizierung wieviel der Daten eines bestimmten Themas im GDS persistiert werden. Dies wird bspw. für Late-Joining benutzt um Late-Joiners mit letzten Daten aufzusynchronisieren.

Die Redundanz ist die Multiplizität von Kommunikationskanälen bzw. Datenpunkten, um Ausfallsicherheit zu garantieren, über Mehrfachkanäle in der Kommunikation.

Die Filterung ist ein Maß für die Belastung des GDS mit Daten. Durch Filterung beim Herausgeber (vgl. FIG 1) werden im GDS nur Daten bereitgestellt, die für einen Abonnenten erforderlich sind, um eine Funktionalität des Abonnenten bereitzustellen.

Die Eigentumsstärke ist eine Priorität eines Kommunikationskanals der zum Senden und/oder Empfangen benutzt wird. Beispielsweise übernimmt bei einem Ausfall eines Kanals mit Eigentumsstärke X, sofort der Kanal mit Eigentumsstärke X-1, falls existent. Hot stand-by Szenarien sind dadurch möglich, um Ausfälle abzufangen.

Weitere Qualitäten sind im DDS-Standard definiert, vgl. OMG DDS Version 1.4, Kapitel 2.2.3.

Um die Qualitäten einzustellen oder einzuhalten geben die DDS-fähigen Controller Daten in den GDS heraus oder abonnieren Daten vom GDS.

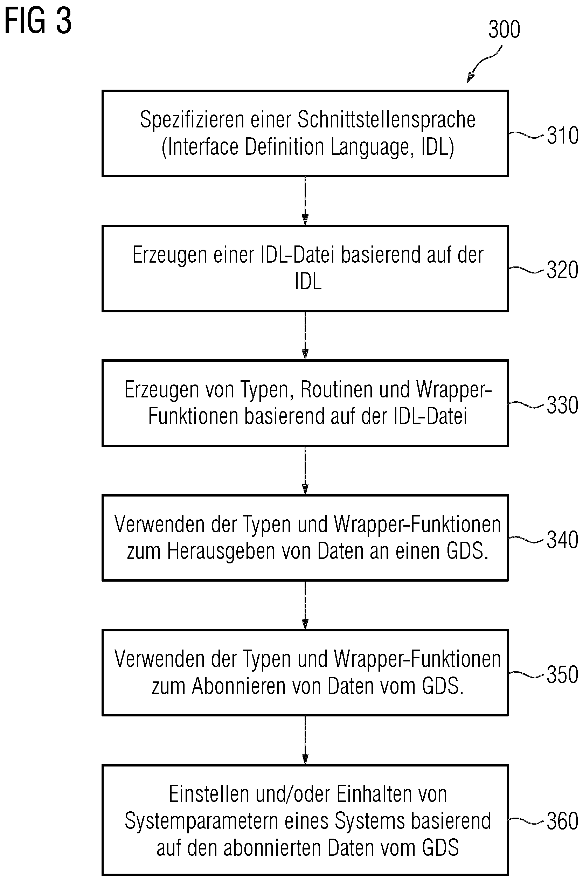

FIG 3 veranschaulicht einen technischen Arbeitsablauf 300 zum Implementieren des DDS-Standards. Ein erster Schritt umfasst ein Spezifizieren (310) einer Schnittstellensprache (Interface Definition Language, IDL). Die Interface Definition Language (IDL) spezifiziert eine Syntax, die zur Definition von Daten und Schnittstellen eines Systems verwendet wird. Sie wird normalerweise in Verbindung mit anderen Spezifikationen verwendet, die weiter definieren, wie diese Daten und Schnittstellen in bestimmten Zusammenhängen verwendet werden, bspw. Spezifikationen, die festlegen, wie die in der IDL definierten Konstrukte auf bestimmte Programmiersprachen wie C/C++, Java, C# usw. abgebildet werden.

Ein zweiter Schritt umfasst ein Verwenden (320) der IDL zum Erzeugen einer IDL-Datei. Die IDL Datei spezifiziert das System.

Ein dritter Schritt umfasst ein Erzeugen (330) von Typen, Routinen und Wrapper-Funktionen basierend auf der IDL-Datei. Typen sind Datentypen im Sinne der Computerwissenschaft, Routinen sind Funktionen bzw. Funktionsblöcke die eine Reihe von Instruktionen im Prozessor durchlaufen, um aus einer gegebenen Eingabe eine Ausgabe zu erzeugen, ein Wrapper ist ein Mechanismus bzw. eine Schnittstelle die ein anderes Stück Software umgibt und die Verwendung des gewrappten Inhalts auf andere Weise ermöglicht. Das Erzeugen (330) von Typen, Routinen und Wrapper-Funktionen basierend auf der IDL-Datei kann durch einen Code Generator durchgeführt werden.

Ein vierter Schritt umfasst ein Herausgeben (340) von Daten an den GDS gemäß dem DDS-Standard, bspw. unter Verwendung der Typen, Routinen und Wrapper-Funktionen.

Ein fünfter Schritt umfasst ein Abonnieren (350) von Daten vom GDS gemäß dem DDS-Standard, bspw. unter Verwendung der Typen, Routinen und Wrapper-Funktionen.

Ein sechster Schritt umfasst ein Einstellen und/oder Einhalten (360) von Systemparametern eines Systems oder von Komponenten dieses Systems basierend auf den abonnierten Daten vom GDS. Dies kann automatisch durch die den GDS verwaltete Middleware (Implementierung) passieren. Beispielsweise findet ein mehrstufiger Ack-Nack Handshake statt, der die Qualitäten beider Endpunkte miteinander vergleicht. Die Systemparameter können über das TIA-Portal eingestellt oder überwacht werden. In einer bevorzugten Ausführungsform können die Qualitäten über die IDL spezifiziert werden bzw. in einer XML Datei. Die XML Datei kann über das TIA Portal konfiguriert werden und dann der Middleware (DDS Implementierung) bereitgestellt werden. Die Datei kann dann von den Generatoren genutzt werden, um die Qualitäten zu setzen. Das Prüfen, ob die Qualitäten eingehalten sind, kann während einer Laufzeit stattfinden.

Durch die Implementierung des DDS-Standards in Controllern kann auf Gateways verzichtet werden. Hieraus ergeben sich geringere Verzögerungen in der Kommunikation und einzelne Schwachstellen in einem Kommunikationsnetz können eliminiert werden.

Durch die erfindungsgemäße Lösung wird eine unabhängige und isolierte Entwicklung von Services in Multi-domain Architekturen ermöglicht (service-domain-oriented architectures). Der Vorteil ist, dass eine Kommunikation nicht explizit zwischen Komponenten verdrahtet wird sondern über den GDS flexibel aufgebaut ist. Eine Ankoppelung von weiteren Diensten oder Vorrichtungen an Themen ist einfach möglich, indem ein Thema abonniert wird, um automatisch die Daten des verteilten Systems zu erhalten. Damit können einzelne Dienste oder Vorrichtungen implementiert und bei verschiedenen Zielen verwendet werden, ohne die Kommunikation zwischen Quelle und Ziel anpassen zu müssen.

Ferner können Komponenten zu einem System hinzugefügt werden, ohne spezifische Integrationsprojekte zum Verknüpfen von Komponente und System vornehmen zu müssen (plug & operate). Neue Dienste oder Vorrichtungen können somit ohne Kommunikationskonfiguration am GDS teilnehmen in dem sie sich auf Themen abonnieren. Eine Art Plug' and Play bzw. Plug' and Operate wird möglich durch die Verwendung des GDS.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.

Insbesondere kann das oben beschriebene Verfahren 300 in Form eines Programmcodes auf einem nicht flüchtigen computerlesbaren Medium gespeichert sein. Der Code kann, wenn er von einem oder von mehreren Prozessoren des Systems 200 ausgeführt wird, einen oder mehrere Controller 210, 220, 230, 240 des Systems 200 dazu veranlassen einen oder mehrere der oben beschriebenen Verfahrensschritte des Verfahrens 300 durchzuführen.

## Patentansprüche

1. Controller (210, 220, 230, 240) eines Systems (200), umfassend:
eine Sendevorrichtung zum Herausgeben (340) von Daten an einen globalen Datenraum (Global Data Space, GDS, 250) gemäß dem Data Distribution Service Standard (DDS-Standard);
eine Empfangsvorrichtung zum Abonnieren (350) von Daten vom GDS (250) gemäß dem DDS-Standard; und
eine Steuervorrichtung zum Einstellen und/oder Einhalten (360) von Systemparametern des Systems (200) basierend auf den abonnierten Daten vom GDS.

2. Controller (210, 220, 230, 240) nach Anspruch 1, ferner umfassend:
eine Compilervorrichtung zum Erzeugen (330) von Typen, Routinen und Wrapper-Funktionen basierend auf einer Datei (Interface Definition Language Datei, IDL Datei), welche eine Schnittstelle (213, 223, 233, 243) des Controllers (210, 220, 230, 240) zum GDS (250) definiert.

3. Controller (210, 220, 230, 240) nach Anspruch 1 oder 2, wobei der Controller (210) ein HMI (Human Machine Interface), ein Industrie PC (IPC), ein Edge Device, ein Switch, oder ein Router ist.

4. Controller (210, 220, 230, 240) nach einem der Ansprüche 1 bis 3, wobei die von der Sendevorrichtung herausgegebenen Daten einen Kommunikationskanal zwischen dem Controller (210, 220, 230, 240) und einem Abonnenten der herausgegebenen Daten konfigurieren, und/oder die von der Empfangsvorrichtung abonnierten Daten den Kommunikationskanal konfigurieren.

5. Verfahren (300) zum Steuern eines Systems (200) mittels eines Controllers (210, 220, 230, 240), umfassend:
Herausgeben (340) von Daten an einen globalen Datenraum (Global Data Space, GDS, 250) gemäß dem Data Distribution Service Standard (DDS-Standard);
Abonnieren (350) von Daten vom GDS (250) gemäß dem DDS-Standard; und
Einstellen und/oder Einhalten (360) von Systemparametern eines Systems (200) basierend auf den abonnierten Daten vom GDS (250).

6. Verfahren (300) nach Anspruch 5, ferner umfassend:
Erzeugen (330) von Typen, Routinen und Wrapper-Funktionen basierend auf einer Datei (Interface Definition Language Datei, IDL Datei), welche eine Schnittstelle (213, 223, 233, 243) des Controllers (210, 220, 230, 240) zum GDS (250) definiert.

7. Verfahren (300) nach Anspruch 5 oder 6, wobei der Controller (210) ein HMI (Human Machine Interface), ein Industrie PC (IPC), ein Edge Device, ein Switch, oder ein Router ist.

8. Verfahren (300) nach einem der Ansprüche 5 bis 7, wobei die herausgegebenen Daten einen Kommunikationskanal zwischen dem Controller (210, 220, 230, 240) und einem Abonnenten der herausgegebenen Daten konfigurieren, und/oder die abonnierten Daten den Kommunikationskanal konfigurieren.

9. System (200), umfassend:
eine Vielzahl von Controllern (210, 220, 230, 240) nach einem der Ansprüche 1 bis 4.

10. Nicht flüchtiges computerlesbares Medium, das darauf gespeicherten Code umfasst, welcher, wenn er von einem oder von mehreren Prozessoren des Systems nach Anspruch 9 ausgeführt wird, einen oder mehrere der Controller (210, 220, 230, 240) des Systems (200) dazu veranlasst das Verfahren (300) nach einem der Ansprüche 5 bis 8 durchzuführen.
